# EUROPÄISCHE PATENTSCHRIFT

(11) **EP 2 078 801 B1**
(45) Veröffentlichungstag und Bekanntmachung des Hinweises auf die Patenterteilung: **07.03.2012**
(21) Anmeldenummer: 09000062.1
(22) Anmeldetag: 06.01.2009
(51) Int. Cl.: E04F 15/02, E04F 15/04, F16B 5/00

(54) **Einrichtung zum Verriegeln zweier Bauplatten**
Device for locking two building slabs
Dispositif de verrouillage de deux panneaux de construction

(30) Priorität: 09.01.2008 DE 102008003550
(43) Veröffentlichungstag der Anmeldung: 15.07.2009
(73) Patentinhaber: Flooring Technologies Ltd., Pieta MSD 08 (MT)
(72) Erfinder:
(74) Vertreter: Rehmann, Thorsten

(56) Entgegenhaltungen:
- WO-A-2005/054599
- DE-B3-102006 037 614
- US-A1- 2006 101 769

## Beschreibung

Die Erfindung betrifft eine Einrichtung und ein Verfahren zum Verriegeln zweier miteinander verbundener Bauplatten, insbesondere Bodenpaneele mit einem Kern aus Holzwerkstoff oder Holzwerkstoff-Kunststoff-Gemisch, in einer Richtung senkrecht zu einer Sichtseite, bestehend aus: a) einer ersten Bauplatte mit einer Seitenkante I und mit einer im Kern der Bauplatte vorgesehenen, parallel zur Sichtseite verlaufenden ersten Nut; b) mindestens einer zweiten Bauplatte mit einer Seitenkante II und mit einer im Kern der Bauplatte vorgesehenen, parallel zur Sichtseite verlaufenden zweiten Nut; c) einem Verriegelungselement, das in die erste Nut der ersten Bauplatte eingesetzt ist, um in die zweite Nut der zweiten Bauplatte einzugreifen, wenn nach dem Verbinden der Bauplatten durch eine vertikale Absenkbewegung beide Nuten zur Überdeckung gelangt sind, wobei d) zur Verriegelung zweier Bauplatten in einer zur Sichtseite parallelen Richtung an der Seitenkante I eine über diese seitlich hervorstehende untere Lippe mit einem äußeren, nach oben hervorstehenden Vorsprung und an der der Seitenkante I gegenüberliegenden Seitenkante II eine zur Unterseite gerichtete Ausnehmung vorgesehen ist, die zum Vorsprung korrespondierend ausgestaltet ist, und e) das Verriegelungselement durch in Längsrichtung auf es wirkende Kräfte in Querrichtung ausbiegbar ist.

Eine solche Einrichtung ist aus der DE 10 2006 037 614 B3 bekannt. Diese Verriegelungseinrichtung ist an der Querseite von Bodenpaneelen vorgesehen. Zusätzlich zu dieser Verriegelungseinrichtung ist an der Querseite eine hakenförmige Profilierung ausgebildet, so dass zwei Paneele mit ihren Seitenkanten ineinander haken können und dadurch in einer parallel zur Oberseite verlaufenden Richtung verriegelt sind. An der Längsseite sind die Paneele mit einer selbst verriegelnden Feder/Nut-Profilierung versehen. Beim Verlegen wird das neu an dem bereits verlegten Paneelverbund anzulegende Paneel zunächst an der Längsseite mit einem bereits ausgelegten Paneel durch Einwinkeln der Feder in die Nut verbunden und dann in der winkeligen Lage in Richtung der Seitenkante des vorher verlegten Paneels in derselben Reihe geschoben und dort abgesenkt. Die hakenförmige Profilierung greift ineinander und das Verriegelungselement schnappt dann selbsttätig in das neu angelegte Paneel ein.

Eine ähnliche Einrichtung ist beispielsweise aus der EP 1 818 478 A1 bekannt. Bei dieser Ausführungsform benötigt das Verriegelungselement, um Ausbiegen zu können, einen Gegendruck von außen, so dass diese Einrichtung nicht geeignet ist, Paneele, die in einer ersten Reihe miteinander verbunden sind, auch in vertikaler Richtung miteinander zu verriegeln.

Aus der WO 2005/054599 A1 ist ein gleichwirkendes Verriegelungselement aus Kunststoff bekannt, das an seiner Oberseite abgeschrägt ist. Ähnlich einem Türschnapper wird durch die Schräge das Verriegelungselement von dem neu anzusetzenden Paneel nach innen in die Nut hineingedrückt, wenn dieses mit seiner Unterseite auf die Abschrägung auftrifft und weiter abgesenkt wird.

In der WO 2006/043893 A1 und der EP 1 650 375 A1 wird offenbart, Bodenpaneele mit einem flexiblen Verriegelungselement zu verbinden, welches in Aussparungen in beiden zu verbindenden Platten eingreift.

In der WO 00/47841 ist ein federndes Element offenbart, das zwei über ein Nut- und Federprofil verbundene Paneele verriegelt und die Verbindung unter Spannung hält. Aus der EP 1 475 485 A2 ist ein federndes Element bekannt, das auf zwei verbundene Paneele eine Kraft überträgt und sie so in vertikaler Richtung verriegelt.

Die EP 1 197 611 A1 offenbart Fußbodenplatten, die über Formfedern miteinander verbunden werden können. Dabei werden die Formfedern mittels Verriegelungsbolzen an den Unterseiten der zu verbindenden Paneele befestigt.

Von der schwedischen Firma Välinge wird unter der Bezeichnung "5G + technology" eine für die Querseite von Bodenpaneelen vorgesehene Verriegelungseinrichtung beworben, bei der ein separater Verriegelungsstreifen aus Kunststoff vorgesehen ist, und die Verbindung zweier Paneele an ihren Querseiten ebenfalls durch Abwinkeln des neu anzulegenden Paneels erfolgt. Die Verriegelung des an der Querseite neu angelegten Paneels durch den Kunststoffstreifen erfolgt erst dann, wenn in der nächsten Reihe mit der Längsseite ein neues Paneel angelegt ist. Dies wird dadurch ermöglicht, dass der Verriegelungsstreifen aus einem flexiblen Kunststoff ausgebildet und länger ausgeführt ist als die Nut, in der er angeordnet ist. Er ragt mit einem Ende aus der Nut heraus. Wird das neue Paneel an der Querseite angelegt, passiert zunächst nichts. Wird in der nächsten Reihe ein neues Paneel an dieser Verbindungsstelle angelegt, drückt dieses Paneel den Verriegelungsstreifen in die Nut hinein, dieser weicht, da er mit seinem anderen freien Ende an ein in der vorletzten Reihe verlegtes Paneel anstößt, seitlich aus und greift mit dem ausgebogenen Bereich in die Nut des neu angelegten Paneels ein. Nachteilig ist hierbei einerseits, dass die Verriegelung in vertikaler Richtung nur über den relativ kleinen ausgebogenen Bereich des Verriegelungselementes möglich ist. Andererseits kann keine sichere Verriegelung in der ersten Reihe verlegter Paneele erreicht werden, weil die Paneele schwimmend verlegt werden müssen. D. h., die erste Reihe liegt nicht unmittelbar an der Wand an, sondern es ist ein Spalt von 1 - 1,5 cm einzuhalten. Wird in der zweiten Reihe dann ein neues Paneel angelegt, wird der Verriegelungsstreifen zwar in die Nut hinein geschoben, er wird mangels Widerlager aber nicht ausgebogen, sondern wird durch die Nut hindurch geschoben und ragt dann am anderen Ende des Paneels aus der Nut heraus.

Bei den derzeitig verwendeten Verriegelungsprofilen ist das jeweils herunter gewinkelte Paneel bereits fest mit dem Paneelverbund verbunden, da das Verriegeln des Profils während bzw. direkt nach dem Fügen der Paneele an ihren Querseiten geschieht. Dies erweist sich für das Verlegen von Fußböden als nachteilig, weil Fehllegungen nur durch umständliches Entriegeln der Querprofile möglich wird.

Von dieser Problemstellung ausgehend soll die eingangs erläuterte Einrichtung verbessert werden.

Das Problem wird auf zwei Arten gelöst, um zu ermöglichen, dass das Verriegelungselement durch in Längsrichtung auf es einwirkende Kräfte in Querrichtung ausbiegbar ist, in dem entweder das Verriegelungselement mindestens einen dem Nutgrund zugewandten Vorsprung aufweist, der in eine in der Nut vorgesehene, in den Kern hineinragende Ausnehmung eingreift, oder das Verriegelungselement an einem seiner freien Enden einen nach oben ragenden Vorsprung aufweist, der in eine auf der Unterseite der rechtwinkelig zur Seitenkante I verlaufenden Seitenkante III vorgesehenen Feder eingebrachte Ausnehmung eingreift, und dadurch jeweils bezogen auf die Längsrichtung das Verriegelungselement in der ersten Nut arretierbar ist.

Durch diese Ausgestaltung greift das Verriegelungselement erst dann zur Verriegelung in das gegenüberliegende Paneel ein, wenn ein neues Paneel angelegt worden ist. Wird ein Paneel neu in einer benachbarten Reihe angelegt, stößt die Feder dieses neu anzulegenden Paneels auf das freie Ende des Verriegelungselementes und versucht, dieses in Längsrichtung in die Nut hineinzuschieben. Da das Verriegelungselement in der Nut arretierbar ist, ist ein Verschieben ausgeschlossen und das Verriegelungselement biegt in Querrichtung aus und greift dabei dann in die Nut des ihm gegenüberliegenden, noch nicht verriegelten Paneels ein.

Das Verriegelungselement kann aus Kunststoff oder einem Holzwerkstoff-Kunststoff-Gemisch oder aus Metall bestehen.

Durch die Verlagerung des Verriegelungselementes in Längsrichtung und dabei auch in Querrichtung und in die zweite Nut des zweiten Paneels hinein, ohne dass es hierzu eines "Gegendrucks" von außen bedarf, können auch Paneele in einer ersten Reihe durch Anlegen der zweiten Paneelreihe miteinander in vertikaler Richtung verriegelt werden.

Vorzugsweise ragt das Verriegelungselement in einer ersten Stellung mit seinem freien Ende in Längsrichtung aus der ersten Nut heraus und in einer zweiten Stellung ist es in der ersten Nut aufgenommen und greift dann zusätzlich auch in die zweite Nut ein.

Vorzugsweise ist der Vorsprung in der Ausnehmung fixiert, was einerseits den Transport nicht verlegter Paneele erleichtert und sicherstellt, dass das Verriegelungselement nicht aus der Nut herausfällt und andererseits ist eine sichere Arrettierung in der Nut möglich.

Zur Erhöhung seiner Elastizität kann das Verriegelungselement eine Mehrzahl in Querrichtung eingebrachter Aussparungen aufweisen, die insbesondere vorzugsweise nur im Bereich der freien Enden des Verriegelungselementes vorgesehen sind. Der ausknickende und die vertikale Verriegelung bewirkende Bereich des Verriegelungselementes wird, wenn er nicht geschlitzt ist, höhere Kräfte in vertikaler Richtung übertragen können, so dass die Ausreißfestigkeit der Verbindung gesteigert wird.

Vorzugsweise weisen das Verriegelungselement und die erste und zweite Nut im Wesentlichen dieselbe Länge auf. Insbesondere vorzugsweise ist das Verriegelungselement ein klein wenig länger als die Nut, damit die Aktivierung des herausragenden freien Endes vereinfacht bzw. verbessert wird.

Das Verfahren zum Verriegeln zweier miteinander verbundener Bauplatten, insbesondere Bodenpaneele, in einer Richtung senkrecht zu einer Sichtseite zeichnet sich dadurch aus,
- das Verriegelungselement so in die erste Nut eingesetzt wird, dass es mit einem freien Ende einseitig aus der Nut herausragt und mit seinem anderen Ende arretiert wird,
- eine dritte Bauplatte an beide miteinander verbundenen Bauplatten angelegt und mit diesen verbunden wird, wobei
- die dritte Bauplatte an das freie Ende des Verriegelungselementes anstößt und dabei das Verriegelungselement in Längsrichtung in die Nut hineindrückt,
- wodurch das Verriegelungselement in die Nut in Querrichtung ausbiegt, und
- das Verriegelungselement durch die Ausbiegung in Querrichtung auch in die zweite Nut der zweiten Bauplatte eingreift, wodurch die erste und zweite Bauplatte dann miteinander verriegelt werden.

Mit Hilfe einer Zeichnung soll die Erfindung nachfolgend näher erläutert werden:

Es zeigt:
- Figur 1: die Draufsicht auf die erste Seitenkante eines Bodenpaneels in einer ersten Stellung des Verriegelungselementes;

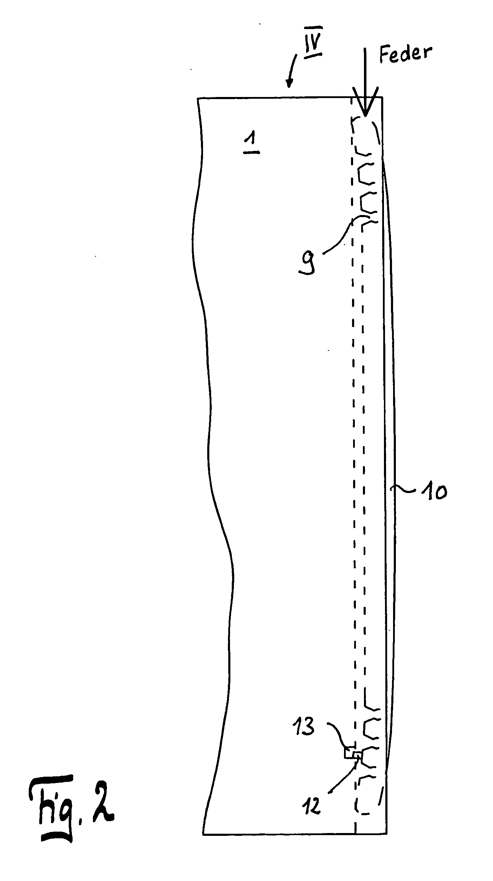

- Figur 2: die Draufsicht gemäß Figur 1 in einer zweiten Stellung des Verriegelungselementes;

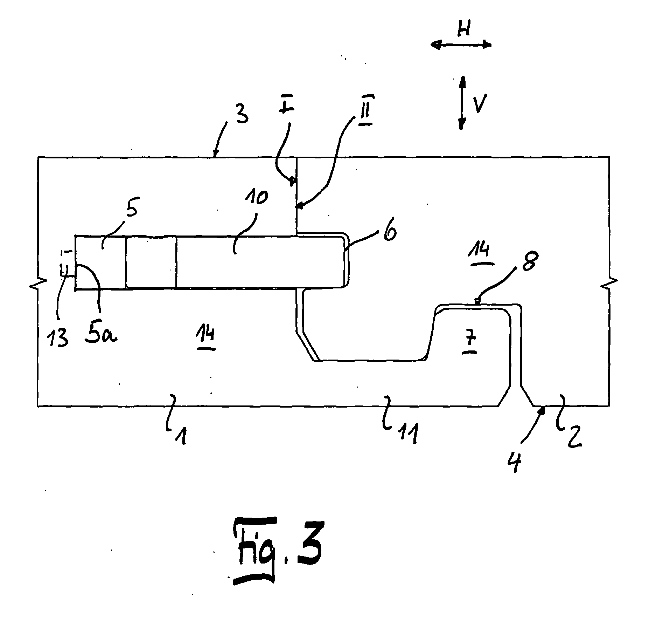

- Figur 3: die Seitenansicht zweier miteinander verbundener Paneele im Bereich der Verbindungsstelle;
- Figur 4: die perspektivische Darstellung eines teilweise verlegten Bundes von Bauplatten;
- Figur 5: die Draufsicht auf ein erstes Verriegelungselement;

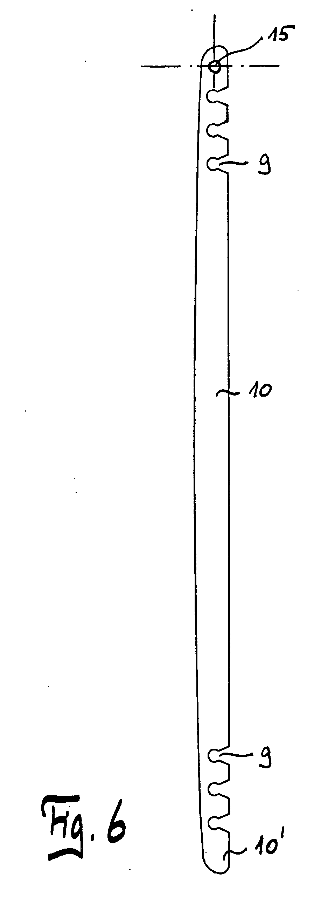

- Figur 6: die Draufsicht auf ein zweites Verriegelungselement.

Die Bauplatte ist vorzugsweise ein Fußbodenpaneel 1, 2, 1', 2', 1", 2" mit einem Kern 14 aus Holzwerkstoff (MDF oder HDF) oder einem Holzwerkstoff-Kunststoff-Gemisch. Auf den Kern 14 kann als Sichtseite 3 eine Dekorschicht mit beispielsweise einer Holzmaserung aufgeklebt bzw. mit dem Kern verpresst sein oder das Dekor kann unmittelbar auf die Sichtseite 3 aufgedruckt sein. An den sich gegenüberliegenden Seitenkanten I, II ist in derselben Horizontalebene je eine parallel zur Sichtseite 3 verlaufende Nut 5, 6 in den Kern 14 eingefräst. Die Nuten 5, 6 können gleichtief oder - wie die Figuren zeigen - unterschiedlich tief ausgebildet sein. In die tiefere (erste) Nut 5 ist ein im wesentlichen über die volle Länge 1 der Nut 5 reichendes Verriegelungselement 10 aus Kunststoff eingesetzt, das mit einem seiner freien Enden 10' über die Nut 5 nach außen hervorsteht.

Die Seitenkanten I, II sind hakenförmig profiliert, so dass zwei miteinander verbundene Paneele 1, 2 in horizontaler Richtung H verriegelt werden. Hierzu ist an der Unterseite 4 an einer Seitenkante I eine über die Seitenkante I seitlich hervorstehende untere Lippe 11 vorgesehen, die einen äußeren, nach oben hervorstehenden Vorsprung 7 aufweist. An der gegenüberliegenden Seitenkante II ist eine zu dem Vorsprung 7 korrespondierende Ausnehmung 8 angeordnet. Die Ausnehmung 8 ist abgestuft, so dass das Paneel 2 auf der Unterlippe 11 des Paneels 1 aufliegt und die Paneele 1, 2 in vertikaler Richtung V abgestützt sind.

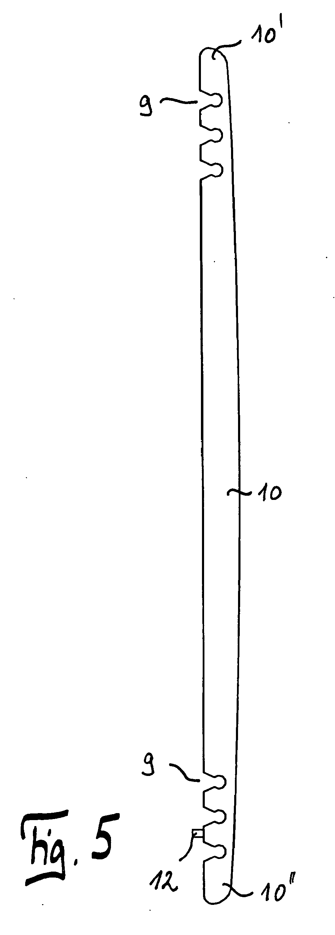

Das Verriegelungselement 10 weist an seiner Rückseite im Bereich des vorderen freien Endes 10" einen Vorsprung 12 auf, der in einer Ausnehmung 13 aufgenommen wird, die im Nutgrund 5a der ersten Nut 5 horizontal in den Kern 14 hineinragt. Der Querschnitt des Verriegelungselementes 10 ist im Wesentlichen rechteckig. Die Tiefe der Vertiefung 13 ist so gewählt, dass der Vorsprung 12 des Verriegelungselementes 10 vollständig hierin aufgenommen wird. In einer alternativen Ausgestaltung (Figur 5), kann der Vorsprung 15 auch an der Oberseite des Verriegelungselementes 10 vorgesehen sein und in eine an der Unterseite der hier nicht näher dargestellten Feder der senkrecht zur Seitenkante I verlaufenden Seitenkante III vorgesehenen Vertiefung eingreifen. In beiden Fällen kann das Verriegelungselement 10 mit dem Vorsprung 12 bzw. 15 in der Vertiefung 13 fixiert - beispielsweise verklebt - sein. Die Vertiefung 13 wird mittels eines eintauchenden Werkzeuges bei der Bearbeitung des Querprofils zur Erzeugung einer Vertiefung mit Grund hergestellt. Bei der alternativen Ausgestaltung kann die Vertiefung auch mittels eines konventionellen Werkzeugs bei der Bearbeitung des Längsprofils als durchgehende Nut in der Unterseite der Feder erzeugt werden.

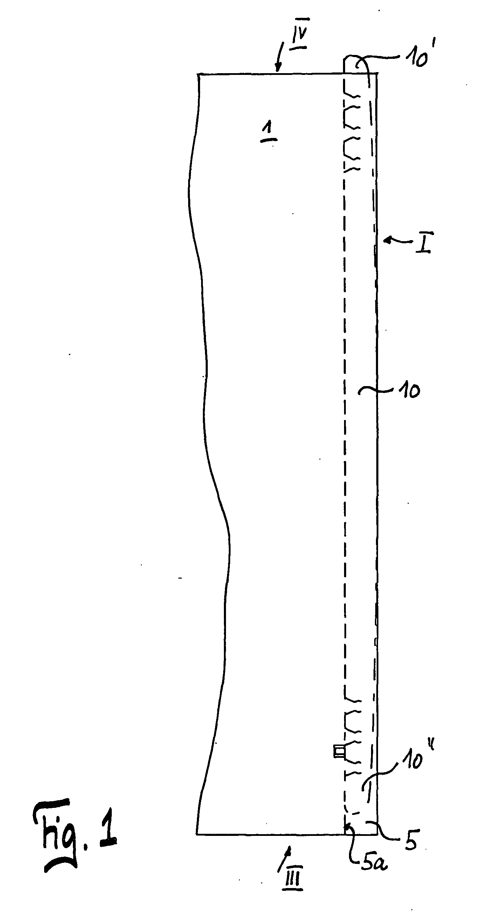

Vor dem Fügen zweier Paneele 1, 2 befindet sich das Verriegelungselement so in der Nut 5, dass es komplett innerhalb der Nut 5 angeordnet ist und nur mit seinem Ende 10' aus der Nut herausragt (Figur 1). Der Vorsprung 12 des Verriegelungselementes 10 liegt vollständig in der Vertiefung 13 der Nut 5.

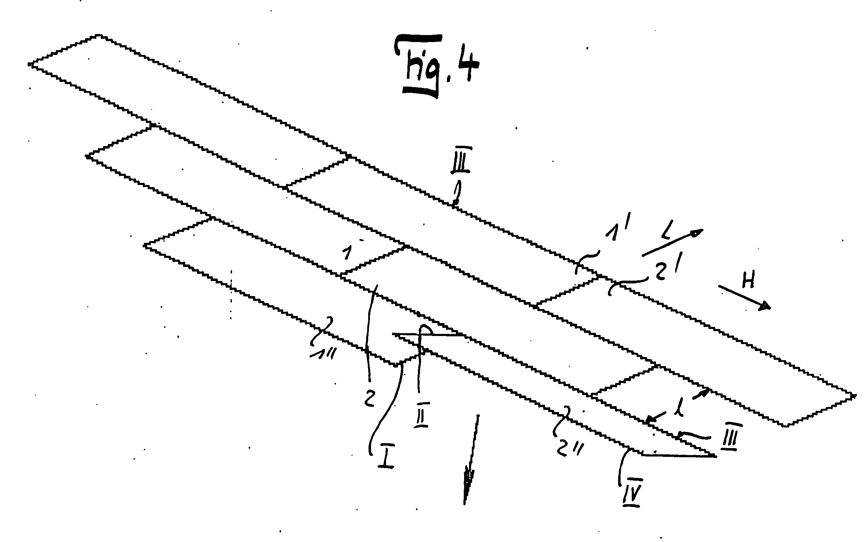

### Figur 4 verdeutlich die Art des Verbindens zweier Paneele 1, 2 an ihren Querseiten:

Zunächst wird ein Paneel 1, das in seiner Nut 5 das Verriegelungselement 10 aufnimmt, mit Hilfe eines an seinen Längsseiten III, IV vorhandenen Feder-/Nut-Profils, wie es beispielsweise in der DE 102 30 818 B3 oder der DE 102 52 864 A1 beschrieben ist, längsseitig mit bereits zwei verlegten Paneelen 1', 2' verbunden und auf den Untergrund abgesenkt. Sodann wird ein weiteres Paneel 2, das über dasselbe Längsprofil verfügt, mit diesem in das Längsprofil des bereits verlegte Paneels 2' eingefügt, aber noch nicht abgesenkt. Die Oberseite des Paneels 2 weist dabei einen Winkel von etwa 20° zu den Oberseiten der bereits verlegten Paneele 1', 2' auf. Dann wird das Paneel 2 in Längsrichtung des ersten bereits abgesenkten Paneels 1 geschoben, bis seine Querseite (Seitenkante 2) am Übergang zur Oberseite in Kontakt mit der Seitenkante I des bereits verlegten Paneels 1 kommt. Dann wird das Paneel 2 abgewinkelt und auf den Unterboden abgesenkt. An den Querseiten sind die Paneele 1, 2 miteinander verbunden und in horizontaler Richtung über das Hakenprofil verriegelt. Das Verriegelungselement 10 befindet sich weiterhin vollständig in der Nut 5 und ragt mit seinem äußeren Ende 12 aus der Nut 5 heraus. Wird nun an der Verbindungsstelle ein neues Paneel 1", 2" an der Längsseite eingewinkelt, wie dies vorstehend beschrieben wurde, stößt die Feder des neu angesetzten Paneels 1", 2" an das aus der Nut 5 hervorstehende Ende 10' des Verriegelungselementes 10 an und drückt dieses in Längsrichtung L, wenn das Paneel 1', 2' auf den Unterboden abgesenkt wird. Da das Verriegelungselement mit seinem Vorsprung 12 in der Nut 5 fixiert ist, kann es sich in Längsrichtung L nicht verschieben, sondern es weicht in Querrichtung H dadurch aus, dass es einknickt und sich seitlich ausbiegt. Dabei gelangt der sich ausbiegende Bereich des Verriegelungselementes 10 in die ge-genüberliegende Nut 6 des Paneels 2. Ist das neue Paneel 1", 2" vollständig auf den Unterboden abgesenkt, ist auch das Verriegelungselement 10 maximal ausgebogen und die Paneele 1, 2 sind miteinander in vertikaler Richtung V verriegelt. Dadurch können auch die Paneele 1, 2 in der ersten Reihe in vertikaler Richtung V zueinander verriegelt werden, denn abweichend von der üblichen Anforderung, einen Gegendruck durch ein bereits liegendes Paneel zu benötigen, ermöglicht die Arretierung in der Nut bei der Aktivierung des Verriegelungselementes das Eingreifen in die Sperrnut, ohne dass dazu ein von außen aufzubringender Gegendruck notwendig wäre.

### Bezugszeichenliste:

- 1: Paneel/Bauplatte
- 1': verlegtes Paneel
- 1": neu zu verlegendes Paneel
- 2: Paneel/Bauplatte
- 2': verlegtes Paneel
- 2": neu zu verlegendes Paneel
- 3: Sichtseite
- 4: Unterseite
- 5: Nut
- 5a: Nutgrund
- 6: Nut
- 7: Vorsprung
- 8: Ausnehmung
- 9: Aussparung/Schlitz
- 10: Verriegelungselement
- 10': Ende
- 10": Ende
- 11: untere Lippe
- 12: Vorsprung
- 13: Vertiefung
- 14: Kern
- 15: Vorsprung
- I: Seitenkante
- II: Seitenkante
- III: Seitenkante
- IV: Seitenkante
- H: horizontale Richtung/Richtung parallel zur Sichtseite/Längsrichtung
- L: Längsrichtung
- l: Länge
- V: vertikale Richtung/Richtung senkrecht zur Sichtseite

## Patentansprüche

1. Einrichtung zum Verriegeln zweier miteinander verbundener Bauplatten (1, 2), insbesondere Bodenpaneelen mit einem Kern (14) aus Holzwerkstoff oder Holzwerkstoff-Kunststoff-Gemisch, in einer Richtung (V) senkrecht zu einer Sichtseite (3), aufweisend
a) eine erste Bauplatte (1) mit einer Seitenkante (I) und mit einer im Kern (14) der Bauplatte (1) vorgesehenen, parallel zur Sichtseite (3) verlaufenden ersten Nut (5),
b) mindestens eine zweite Bauplatte (2) mit einer Seitenkante (II) und mit einer im Kern (14) der Bauplatte (2) vorgesehenen, parallel zur Sichtseite (3) verlaufenden zweiten Nut (6) und
c) ein Verriegelungselement (10), das in die erste Nut (5) der ersten Bauplatte (1) eingesetzt ist, um in die zweite Nut (6) der zweiten Bauplatte (2) einzugreifen, wenn nach dem Verbinden der Bauplatten (1,2) durch eine vertikale Absenkbewegung beide Nuten (5,6) zur Überdeckung gelangen,
d) zur Verriegelung der beiden Bauplatten (1, 2) ist in einer zur Sichtseite (3) parallelen Richtung (H) an einer der Seitenkanten (I) eine über diese seitlich hervorstehende untere Lippe (11) mit einem äußeren, nach oben hervorstehenden Vorsprung (7) und an der dieser Seitenkante (I) gegenüberliegenden Seitenkante (II) eine zu einer Unterseite (4) gerichtete Ausnehmung (8) vorgesehen, die zum Vorsprung (7) korrespondierend ausgestaltet ist,
e) das Verriegelungselement (10) ist durch in Längsrichtung (L) auf es einwirkende Kräfte in Querrichtung (H) ausbiegbar,
**dadurch gekennzeichnet, dass** das Verriegelungselement (10) mindestens einen dem Nutgrund (5a) zugewandten Vorsprung (12) aufweist, der in eine in der Nut (5) vorgesehene, in den Kern (14) hineinragende Ausnehmung (13) eingreift, und **dadurch** bezogen auf die Längsrichtung (L) arretierbar ist.

2. Einrichtung zum Verriegeln zweier miteinander verbundener Bauplatten (1, 2), insbesondere Bodenpaneelen mit einem Kern (14) aus Holzwerkstoff oder Holzwerkstoff-Kunststoff-Gemisch, in einer Richtung (V) senkrecht zu einer Sichtseite (3), aufweisend:
a) eine erste Bauplatte (1) mit einer Seitenkante (I) und mit einer im Kern (14) der Bauplatte (1) vorgesehenen, parallel zur Sichtseite (3) verlaufenden ersten Nut (5),
b) mindestens eine zweite Bauplatte (2) mit einer Seitenkante (II) und mit einer im Kern (14) der Bauplatte (2) vorgesehenen, parallel zur Sichtseite (3) verlaufenden zweiten Nut (6) und
c) einem Verriegelungselement (10), das in die erste Nut (5) der ersten Bauplatte (1) eingesetzt ist, um in die zweite Nut (6) der zweiten Bauplatte (2) einzugreifen, wenn nach dem Verbinden der Bauplatten (1,2) durch eine vertikale Absenkbewegung beide Nuten (5,6) zur Überdeckung gelangen,
d) zur Verriegelung der beiden Bauplatten (1, 2) ist in einer zur Sichtseite (3) parallelen Richtung (H) an einer der Seitenkanten (I) eine über diese seitlich hervorstehende untere Lippe (11) mit einem äußeren, nach oben hervorstehenden Vorsprung (7) und an der dieser Seitenkante (I) gegenüberliegenden Seitenkante (II) eine zu einer Unterseite (4) gerichtete Ausnehmung (8) vorgesehen, die zum Vorsprung (7) korrespondierend ausgestaltet ist,
e) das Verriegelungselement (10) ist durch in Längsrichtung (L) auf es einwirkende Kräfte in Querrichtung (H) ausbiegbar,
**dadurch gekennzeichnet, dass** das Verriegelungselement (10) an einem seiner freien Enden (10") einen nach oben ragenden Vorsprung (15) aufweist, der in eine auf der Unterseite der rechtwinkelig zur Seitenkante I verlaufenden Seitenkante III vorgesehenen Feder eingebrachte Ausnehmung eingreift, und **dadurch** bezogen auf die Längsrichtung (L) arretierbar ist.

3. Einrichtung nach Anspruch 1 oder 2, **dadurch gekennzeichnet, dass** der Vorsprung (12, 15) in der Vertiefung (13) fixiert ist.

4. Einrichtung nach Anspruch 1 oder 2, **dadurch gekennzeichnet, dass** das Verriegelungselement (10) in einer ersten Stellung mit einem freien Ende (10') in Längsrichtung (L) aus der ersten Nut (5) herausragt und in einer zweiten Stellung in der ersten Nut (5) aufgenommen ist und zusätzlich auch in die zweite Nut (6) eingreift.

5. Einrichtung nach einem oder mehreren der vorstehenden Ansprüche, **dadurch gekennzeichnet, dass** das Verriegelungselement (10) zur Erhöhung seiner Elastizität eine Mehrzahl in Querrichtung (H) eingebrachter Aussparungen (9) aufweist.

6. Einrichtung nach Anspruch 5, **dadurch gekennzeichnet, dass** die Aussparungen (9) regelmäßig beabstandet sind.

7. Einrichtung nach einem oder mehreren der vorstehenden Ansprüche, **dadurch gekennzeichnet, dass** das Verriegelungselement (10) im Wesentlichen dieselbe Länge (1) wie die Nut (5) aufweist.

8. Einrichtung nach einem oder mehreren der vorstehenden Ansprüche, **dadurch gekennzeichnet, dass** das Verriegelungselement (10) aus Kunststoff oder einem Holzwerkstoff-Kunststoff-Gemisch oder aus Metall besteht.

9. Einrichtung nach einem oder mehreren der vorstehenden Ansprüche, **dadurch gekennzeichnet, dass** die Verbindung der Bauplatten (1, 2) an den beiden übrigen Seitenkanten (III, IV) mit weiteren Bauplatten (1', 1", 2', 2") über eine Feder-Nut-Profilierung erfolgt.

10. Einrichtung nach Anspruch 9, **dadurch gekennzeichnet, dass** die Verbindung an den übrigen Seitenkanten (III, IV) durch Einwinkeln und Absenken eines neu zu verbindenden Paneels erfolgt.

## Claims

1. Device for locking two interconnected construction panels (1, 2), in particular floor panels having a core (14) made of wood-based material or a wood-based material/synthetic material mixture, in a direction (V) perpendicular to a visible side (3), comprising
a) a first construction panel (1) having a lateral edge (I) and having a first groove (5) which is provided in the core (14) of the construction panel (1) and which extends parallel to the visible side (3),
b) at least a second construction panel (2) having a lateral edge (II) and having a second groove (6) which is provided in the core (14) of the construction panel (2) and which extends parallel to the visible side (3), and
c) a locking element (10) which is inserted into the first groove (5) of the first construction panel (1) so as to engage in the second groove (6) of the second construction panel (2) when the two grooves (5, 6) overlap after the construction panels (1, 2) have been connected by means of a vertical lowering movement,
d) to lock the two construction panels (1, 2), there is provided on one of the lateral edges (I), in a direction (H) parallel to the visible side (3), a lower lip (11) which protrudes laterally beyond said lateral edge and which has an outer, upwardly protruding projection (7), and there is provided on the lateral edge (II), opposite said lateral edge (I), a recess (8) which is directed towards an underside (4) and which is designed in a corresponding manner to the projection (7),
e) the locking element (10) can be bent out in the transverse direction (H) by means of forces acting thereon in the longitudinal direction (L),
**characterized in that** the locking element (10) has at least one projection (12) which faces the groove bottom (5a) and which engages in a recess (13) provided in the groove (5) and projecting into the core (14), and can thereby be locked in place relative to the longitudinal direction (L).

2. Device for locking two interconnected construction panels (1, 2), in particular floor panels having a core (14) made of wood-based material or a wood-based material/synthetic material mixture, in a direction (V) perpendicular to a visible side (3), comprising:
a) a first construction panel (1) having a lateral edge (I) and having a first groove (5) which is provided in the core (14) of the construction panel (1) and which extends parallel to the visible side (3),
b) at least a second construction panel (2) having a lateral edge (II) and having a second groove (6) which is provided in the core (14) of the construction panel (2) and which extends parallel to the visible side (3), and
c) a locking element (10) which is inserted into the first groove (5) of the first construction panel (1) so as to engage in the second groove (6) of the second construction panel (2) when the two grooves (5, 6) overlap after the construction panels (1, 2) have been connected by means of a vertical lowering movement,
d) to lock the two construction panels (1, 2), there is provided on one of the lateral edges (I), in a direction (H) parallel to the visible side (3), a lower lip (11) which protrudes laterally beyond said lateral edge and which has an outer, upwardly protruding projection (7), and there is provided on the lateral edge (II), opposite said lateral edge (I), a recess (8) which is directed towards an underside (4) and which is designed in a corresponding manner to the projection (7),
e) the locking element (10) can be bent out in the transverse direction (H) by means of forces acting thereon in the longitudinal direction (L),
**characterized in that** the locking element (10) has on one of its free ends (10") an upwardly projecting projection (15) which engages in a recess made on the underside of the tongue which is provided on the lateral edge III extending at a right angle to the lateral edge I, and can thereby be locked in place relative to the longitudinal direction (L).

3. Device according to Claim 1 or 2, **characterized in that** the projection (12, 15) is fixed within the depression (13).

4. Device according to Claim 1 or 2, **characterized in that**, in a first position, the locking element (10) projects from the first groove (5) in the longitudinal direction (L) by way of a free end (10') and, in a second position, is accommodated in the first groove (5) and additionally also engages in the second groove (6).

5. Device according to one or more of the preceding claims, **characterized in that**, in order to increase its elasticity, the locking element (10) has a plurality of notches (9) made in the transverse direction (H).

6. Device according to Claim 5, **characterized in that** the notches (9) are spaced uniformly apart.

7. Device according to one or more of the preceding claims, **characterized in that** the locking element (10) has substantially the same length (1) as the groove (5).

8. Device according to one or more of the preceding claims, **characterized in that** the locking element (10) is made of synthetic material or a wood-based material/synthetic material mixture or of metal.

9. Device according to one or more of the preceding claims, **characterized in that** the construction panels (1, 2) are connected to further construction panels (1', 1", 2', 2") at the other two lateral edges (III, IV) via tongue-and-groove profiling.

10. Device according to Claim 9, **characterized in that** the connection at the other lateral edges (III, IV) is carried out by angling in and lowering a new panel which is to be connected.

## Revendications

1. Dispositif de verrouillage de deux panneaux de construction (1, 2), en particulier panneaux de plancher, reliés ensemble, qui comprennent une âme (14) en matériau dérivé du bois ou en un mélange de matériau dérivé du bois et de matière synthétique, dans une direction (V) orthogonale à une face visible (3), présentant
a) un premier panneau de construction (1) ayant un bord latéral (I) et une première rainure (5) s'étendant parallèlement à la face visible (3) et prévue dans l'âme (14) du panneau de construction (1),
b) au moins un deuxième panneau de construction (2) ayant un bord latéral (II) et une deuxième rainure (6) s'étendant parallèlement à la face visible (3) et prévue dans l'âme (14) du panneau de construction (2),
c) un élément de verrouillage (10) qui est inséré dans la première rainure (5) du premier panneau de construction (1) pour s'engager dans la deuxième rainure (6) du deuxième panneau de construction (2) lorsque, après avoir relié les panneaux de construction (1, 2) par un mouvement d'abaissement vertical, les deux rainures (5, 6) arrivent en regard l'une de l'autre,
d) pour le verrouillage des deux panneaux de construction (1, 2), il est prévu dans une direction (H) parallèle à la face visible (3), sur l'un des bords latéraux (I), une lèvre inférieure (11) faisant saillie latéralement au-delà de celui-ci et ayant un bossage (7) extérieur faisant saillie vers le haut, et sur le bord latéral (II) opposé à ce bord latéral (I) un évidement (8) tourné vers une face inférieure (4) qui est arrangé en correspondance avec le bossage (7),
e) l'élément de verrouillage (10) peut fléchir en direction transverse (H) par des forces agissant sur lui dans la direction longitudinale (L),
**caractérisé en ce que** l'élément de verrouillage (10) présente, tourné vers le fond de la rainure (5a), au moins un bossage (12) qui entre en prise dans un évidement (13) prévu dans la rainure (5) et avançant dans l'âme (14), et l'élément de verrouillage peut ainsi être bloqué relativement à la direction longitudinale (L).

2. Dispositif de verrouillage de deux panneaux de construction (1, 2), en particulier panneaux de plancher, reliés ensemble qui comprennent une âme (14) en matériau dérivé du bois ou en un mélange de matériau dérivé du bois et de matière synthétique, dans une direction (V) orthogonale à une face visible (3), présentant
a) un premier panneau de construction (1) ayant un bord latéral (I) et une première rainure (5) s'étendant parallèlement à la face visible (3) et prévue dans l'âme (14) du panneau de construction (1),
b) au moins un deuxième panneau de construction (2) ayant un bord latéral (II) et une deuxième rainure (6) s'étendant parallèlement à la face visible (3) et prévue dans l'âme (14) du panneau de construction (2),
c) un élément de verrouillage (10) qui est inséré dans la première rainure (5) du premier panneau de construction (1) pour s'engager dans la deuxième rainure (6) du deuxième panneau de construction (2) lorsque, après avoir relié les panneaux de construction (1, 2) par un mouvement d'abaissement vertical, les deux rainures (5, 6) arrivent en regard l'une de l'autre,
d) pour le verrouillage des deux panneaux de construction (1, 2), il est prévu dans une direction (H) parallèle à la face visible (3), sur l'un des bords latéraux (I), une lèvre inférieure (11) faisant saillie latéralement sur celui-ci et ayant un bossage (7) extérieur faisant saillie vers le haut, et sur le bord latéral (II) opposé à ce bord latéral (I) un évidement (8) tourné vers une face inférieure (4) qui est arrangé en correspondance avec le bossage (7),
e) l'élément de verrouillage (10) peut fléchir en direction transverse (H) par des forces agissant sur lui dans la direction longitudinale (L),
**caractérisé en ce que** l'élément de verrouillage (10) présente à l'une de ses extrémités libres (10") un bossage (15) dépassant vers le haut, qui s'engage dans un évidement d'une languette prévue sur la face inférieure du bord latéral III s'étendant perpendiculairement au bord latéral I, et l'élément de verrouillage peut ainsi être bloqué relativement à la direction longitudinale (L).

3. Dispositif selon la revendication 1 ou 2, **caractérisé en ce que** le bossage (12, 15) est fixé dans le renfoncement (13).

4. Dispositif selon la revendication 1 ou 2, **caractérisé en ce que** dans une première position, l'élément de verrouillage (10), par son extrémité libre (10'), dépasse en direction longitudinale (L) hors de la première rainure (5), et dans une deuxième position il est reçu dans la première rainure (5) et s'engage en outre dans la deuxième rainure.

5. Dispositif selon l'une ou plusieurs des revendications précédentes, **caractérisé en ce que** l'élément de verrouillage (10) présente, pour augmenter son élasticité, plusieurs encoches (9) pratiquées dans la direction transverse (H).

6. Dispositif selon la revendication 5, **caractérisé en ce que** les encoches (9) sont régulièrement espacées les unes des autres.

7. Dispositif selon l'une ou plusieurs des revendications précédentes, **caractérisé en ce que** l'élément de verrouillage (10) présente sensiblement la même longueur (I) que la rainure (5).

8. Dispositif selon l'une ou plusieurs des revendications précédentes, **caractérisé en ce que** l'élément de verrouillage (10) est en matière synthétique, ou en un mélange de matériau dérivé du bois et de matière synthétique, ou en métal.

9. Dispositif selon l'une ou plusieurs des revendications précédentes, **caractérisé en ce que** la liaison des panneaux de construction (1, 2) sur les deux bords latéraux restants (III, IV), avec d'autres panneaux de construction (1', 1", 2', 2") s'effectue par l'intermédiaire d'un profilage en rainure et languette.

10. Dispositif selon la revendication 9, **caractérisé en ce que** la liaison sur les deux bords latéraux restants (III, IV) s'effectue en mettant sous angle et en abaissant un nouveau panneau à relier.
